# EUROPÄISCHE PATENTANMELDUNG

(11) **EP 1 013 405 A2**
(43) Veröffentlichungstag der Anmeldung: **28.06.2000**
(21) Anmeldenummer: 99122221.7
(22) Anmeldetag: 06.11.1999
(51) Int. Cl.: B29C 53/08

(54) **Verfahren zur Herstellung eines gekrümmten Schlauches**

(30) Priorität: 23.12.1998 DE 19859396; 04.03.1999 DE 19909409
(71) Anmelder: Mündener Gummiwerk GmbH, 34346 Hann. Münden (DE)
(72) Erfinder: Möller, Thilo, D-34346 Hann. Münden (DE)
(74) Vertreter: WALTHER, WALTHER & HINZ Patentanwälte

(57) **Zusammenfassung**

Verfahren zur Herstellung eines gekrümmten Schlauches, insbesondere ein Elastomer aufweisenden Schlauches, wobei zunächst ein Rohling (1) hergestellt wird, der zur Formgebung während der Vulkanisation in einer Negativform mit rohrförmigen Kanten einliegt, wobei die Negativform als Rohr (10) ausgebildet ist, in das der Rohling (1) eingeschoben wird.

## Beschreibung

Die Erfindung betrifft ein Verfahren zur Herstellung eines gekrümmten Schlauches, insbesondere ein Elastomer aufweisenden Schlauches, wobei zunächst ein Rohling hergestellt wird, der zur Formgebung während der Vulkanisation in einer Negativform einliegt.

Derartige gekrümmte Schläuche werden üblicherweise in der Automobilindustrie, beispielsweise als Kraftstoffschläuche oder auch als Krümmerschläuche verwandt. Solche Schläuche bestehen aus einem Elastomer mit einem Druckträger in Form eines Gewebes oder Gestrickes und werden zur Formgebung auf einem entsprechend vorgeformten Dorn vulkanisiert. Die Form eines derartigen Schlauches kann hierbei überaus bizarr sein, insbesondere wenn ein derartiger Schlauch den räumlichen Gegebenheiten im Motorraum angepasst werden muss.

Aus der EP-A 0 755 773 ist nun ein Verfahren zur Herstellung von Krümmerschläuchen bekannt, bei dem ein Schlauchrohling auf einen Kunststoffdorn extrudiert wird, der Schlauchrohling zusammen mit dem im Inneren des Schlauches befindlichen Kunststoffdorns auf eine bestimmte Länge geschnitten wird, der Rohling mit dem im Inneren befindlichen Kunststoffdorn in eine Negativform eingelegt wird, der Schlauch zusammen mit dem Dorn in der Negativform vulkanisiert wird, wobei nach Abschluss der Vulkanisation der Dorn entfernt wird. Insbesondere bei Kraftfahrzeugschläuchen, die eine Querschnitt zwischen 10 mm und 15 mm aufweisen, werden als Dorne mit einem entsprechenden Querschnitt versehene Kunststoffvollprofile verwendet. Nach dem Abschluss der Vulkanisation müssen diese Dorne wieder aus dem fertigen Schlauch entfernt werden, wobei derartige Dorne, wenn sie nur eine geringe Länge aufweisen, weggeworfen werden beziehungsweise im Idealfall recycelt werden.

Derartige Schläuche sind, insbesondere wenn sie als Kraftstoffschläuche Verwendung finden, mit einer Innenschicht aus Fluorkunststoff versehen, die eine Stärke von 0,1 bis 0,2 mm aufweist (DE-A1 40 17 273). Eine solche Sperrschicht verhindert die Permeation von Kraftstoff durch den Schlauch hindurch. Es hat sich nun gezeigt, dass, wenn der Dorn in einen solchen mit einer derartigen Innenschicht versehenen Schlauch eingeführtwird, diese Innenschicht an verschiedenen Stellen Falten schlägt, beziehungsweise an anderen Stellen reißt.

Aus der DE-A 1 24 53 510 ist ein Verfahren der eingangs genannten Art bekannt; hierbei werden mehrere Planen eines Werkzeugs übereinander angeordnet, wobei zwei derartige Planen auf ihren einander zugewandten Flächen zusammen eine rohrähnliche Aussparung bzw. rohrähnliche Kontur zur Aufnahme eines Rohlings aufweisen. Die Herstellung eines solchen Werkzeugs ist jedoch relativ aufwendig und teuer, weshalb sich diese Herstellungsmethode nicht durchgesetzt hat.

Der Erfindung liegt daher die Aufgabe zugrunde, ein Verfahren zur Herstellung eines gekrümmten Schlauches gemäß der eingangs genannten Art bereitzustellen, das ohne einen Dorn im Schlauchrohling während der Vulkanisation zur Formgebung auskommt und das einfach und preiswert in der Herstellung ist.

Die Aufgabe wird erfindungsgemäß dadurch gelöst, dass die Negativform als Rohr ausgebildet ist, in das der Rohling eingeschoben wird. Hierbei wird vorteilhaft um das Einschieben des Rohlings in das Rohr zu erleichtern sowohl das Rohr als auch der Rohling mit einem Gleitmittel eingestrichen.

Ein weiterer Vorteil des Verfahrens zur Herstellung eines gekrümmten Schlauches - wie zuvor beschrieben - besteht darin, dass durch das Rohr, in dem der Rohling während der Vulkanisation einliegt, eine Beschädigung des Rohlings nicht mehr zu befürchten ist. Das heißt, dass viele derartiger Rohre in den Vulkanisationskessel in beliebiger Weise eingelegt werden können. Das heißt, die Beschickung des Kessels ist einfacher, was schlussendlich auch einen preislichen Vorteil darstellt. Darüber hinaus kann der Raum im Kessel naturgemäß besser ausgenutzt werden, eben weil die Rohre in beliebiger Weise dem Kessel zugeführt werden können. Nach dem Stand der Technik ist es so, dass die Dorne mit dem entsprechenden Schlauch einzeln in Stellagen eingehängt werden müssen, wobei die Stellagen insgesamt dann in den Kessel eingeschoben werden.

Gegenstand der Erfindung ist ebenfalls die Verwendung eines Rohrs zur Formgebung eines gekrümmten Schlauches, insbesondere eines ein Elastomer aufweisenden Schlauches, während der Vulkanisation.

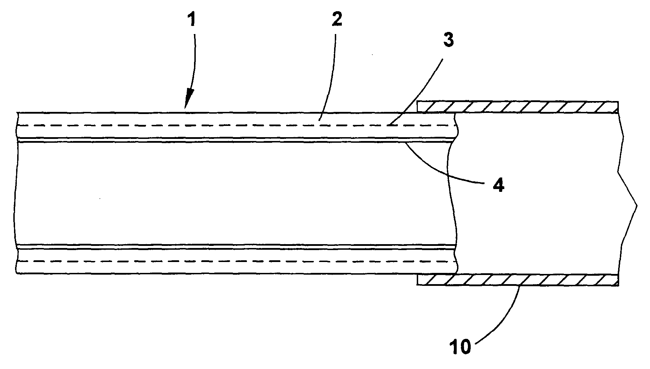

Anhand der Zeichnung wird die Erfindung nachstehend beispielhaft näher erläutert:

Der in der Zeichnung dargestellte Schlauchabschnitt 1 zeigt einen Rohling in Form einer Hülse 2 aus einem Elastomermaterial mit einer Druckträgerschicht 3, zum Beispiel einem Gewebe oder einem Gestricke zur Verstärkung der Elastomerschicht. Im Inneren des Schlauches 1 befindet sich die Sperrschicht 4 beispielweise aus einem Fluorkunststoff. Die Dicke der Sperrschicht beträgt etwa 0,1 mm bis 0,2 mm. Das Rohr, in den der Rohling eingeschoben wird, hat das Bezugszeichen 10.

## Patentansprüche

1. Verfahren zur Herstellung eines gekrümmten Schlauches, insbesondere ein Elastomer aufweisenden Schlauches, wobei zunächst ein Rohling hergestellt wird, der zur Formgebung während der Vulkanisation in einer Negativform mit rohrförmigen Kanten einliegt
**dadurch gekennzeichnet**,
dass die Negativform als Rohr ausgebildet ist, in das der Rohling eingeschoben wird.

2. Verfahren nach Anspruch 1,
**dadurch gekennzeichnet**,
dass Rohr vor dem Einschieben des Rohlings mit einem Gleitmittel versehen ist.

3. Verwendung eines Rohres zur Formgebung eines gekrümmten Schlauches während der Vulkanisation,
insbesondere eines ein Elastomer aufweisenden Schlauches.
